# EUROPEAN PATENT APPLICATION

(11) **EP 3 879 360 A1**
(43) Date of publication of application: **15.09.2021**
(21) Application number: 20162780.9
(22) Date of filing: 12.03.2020
(51) Int. Cl.: G05B 13/04, G05B 17/02

(54) **METHOD FOR CONTROLLING AND/OR MONITORING AN EQUIPMENT OF A CHEMICAL PLANT**

(71) Applicant: BASF SE, 67056 Ludwigshafen am Rhein (DE)
(72) Inventor: METZGER, Lukas, 67056 Ludwigshafen (DE); KESPE, Michael Andreas, 67056 Ludwigshafen (DE); BEIERLING, Thorsten, 67056 Ludwigshafen (DE); RUETHER, Feely, 67056 Ludwigshafen (DE)
(74) Representative: Altmann Stößel Dick Patentanwälte PartG mbB

(57) **Abstract**

A computer-implemented method for controlling and/or monitoring equipment (110) of a chemical plant is proposed. The method comprises the following steps:
a) specifying at least one parameter of a production process to be optimized;
b) receiving input data via at least one input channel (126), wherein the input data comprises operating conditions of the production process, physical properties of a plant equipment layout, and at least one predicted parameter determined from a physico-chemical white box model (128), wherein the physico-chemical white box model (128) comprises at least one thermodynamics model (130), at least one solid formation model (132) and a computational fluid dynamics (CFD) based numerical simulation (134);
c) optimizing the specified parameter via at least one processing device (138), wherein the specified parameter is optimized by adapting the operating conditions of the production process and/or the physical properties of the plant equipment layout based on the predicted parameter.

## Description

### Technical Field

The invention relates to a computer-implemented method for controlling and/or monitoring an equipment of a chemical plant, a computer-implemented method for designing plant equipment layout of a chemical plant, a computer programs, a controlling system and a designing system. The invention specifically may be used for technical precipitation processes in the chemical industry such as of pigments, catalysts, crop science materials, or batteries. Other applications are possible.

### Background art

Several approaches and attempts are known for understanding technical precipitation processes in the chemical industry. For example, simulating precipitation based on Computational Fluid Dynamics (CFD) is known, see for example, Marchisio et al. "Quadrature method of moments for population-balance equations", April 16, 2004, https://doi.org/10.1002/aic.690490517, Anderson et al. "Predicting crystal growth via a unified kinetic three-dimensional partition model", Nature 544, 456-459 (2017); https://doi.org/10.1038/nature21684, Choi et al. "Investigation of Crystallization in a Jet Y-Mixer by a Hybrid Computational Fluid Dynamics and Process Simulation Approach", Crystal Growth & Design 2005, 5, 3, 959-968, April 9, 2005, https://doi.org/10.1021/cg049670x, Gavi et al. "CFD Modelling of Nano-Particle Precipitation in Confined Impinging Jet Reactors", Chemical Engineering Research and Design, Volume 85, Issue 5, 2007, Pages 735-744, https://doi.org/10.1205/cherd06176, Cheng et al. "CFD-PBE simulation of premixed continuous precipitation incorporating nucleation, growth and aggregation in a stirred tank with multi-class method", Chemical Engineering Science, Volume 68, Issue 1, 22 January 2012, Pages 469-480, https://doi.org/10.1016/j.ces.2011.10.032.

Other approaches propose simulating solid formation by use of classical particle formation kinetics, see e.g. Kügler et al. "On Precipitation of Sparingly Soluble Fluoride Salts", Cryst. Growth Des. 2018, 18, 2, 728-733, December 13, 2017, https://doi.org/10.1021 /acs.cgd.7b01115.

Other approaches propose calculation of electrolyte thermodynamics, see e.g. https://wwwbrr.cr.usgs.gov/projects/GWC_coupled/phreeqc.v1/, Hartig et al. "Multi-component and multi-phase population balance model: The case of Georgeite formation as methanol catalyst precursor phase", Chemical EngineeringScience 109(2014)158-170, or Schindler et al. "Zur Thermodynamik der Metallcarbonate, Loslichkeitskonstanten und Freie Bildungsenthalpien von Cu2(OH)2CO3(Malachit) und Cu3(OH)2(CO3)2(Azurit) bei 25 °C", Helvetica Chimica- Volumen 51, Fasciculus.

However, despite the achievements by the above-mentioned approaches, understanding technical precipitation processes in the chemical industry such as of pigments, catalysts, crop science materials, or batteries is still challenging. The known simulation approaches, using either thermodynamics or solid state formation or CFD, are not suitable to allow for model-based conception and design of precipitation assets, in particular to allow for scaling and transfer of a simulated or designed model from lab to the real process. Moreover, these simulation approaches are not suitable for understanding coherences between process and product such as morphology or phase composition.

### Problem to be solved

It is therefore desirable to provide methods and devices which address the above-mentioned technical challenges. Specifically, methods and devices for controlling and/or monitoring of a chemical plant and methods and devices for designing plant equipment layout of a chemical plant shall be provided which allow understanding technical precipitation processes, model-based conception and design of precipitation assets and understanding coherences between process and product.

### Summary

This problem is addressed by a computer-implemented method for controlling and/or monitoring an equipment of a chemical plant, a computer-implemented method for designing plant equipment layout of a chemical plant, a computer programs, a controlling system and a designing system with the features of the independent claims. Advantageous embodiments which might be realized in an isolated fashion or in any arbitrary combinations are listed in the dependent claims.

In a first aspect of the present invention, a computer-implemented method for controlling and/or monitoring equipment of a chemical plant is proposed.

The term "computer-implemented" as used herein is a broad term and is to be given its ordinary and customary meaning to a person of ordinary skill in the art and is not to be limited to a special or customized meaning. The term specifically may refer, without limitation, to a process which is fully or partially implemented by using a data processing means, such as data processing means comprising at least one processor. The term "computer", thus, may generally refer to a device or to a combination or network of devices having at least one data processing means such as at least one processor. The computer, additionally, may comprise one or more further components, such as at least one of a data storage device, an electronic interface or a human-machine interface.

The term "chemical plant" as used herein is a broad term and is to be given its ordinary and customary meaning to a person of ordinary skill in the art and is not to be limited to a special or customized meaning. The term specifically may refer, without limitation, to a device or system of devices or complex of devices for producing and/or manufacturing and/or generating and/or processing at least one chemical product. The chemical plant may be configured for performing at least one production process. The term "production process" as used herein is a broad term and is to be given its ordinary and customary meaning to a person of ordinary skill in the art and is not to be limited to a special or customized meaning. The term specifically may refer, without limitation, to an arbitrary chemical and/or physical process for generating at least one chemical product. In particular, the chemical plant may be configured for producing catalysts, zeolites, battery material, pigments, crop-science materials. For example, catalysts e.g. (Co-) precipitated metal hydroxides, carbonates, zeolites e.g. Chabazite, MOFs, Pigments e.g. TiO2, BaSO4, Crop Science e.g. non-polar large organic molecules for crop protection precipitated in aqueous phase may be produced. The chemical plant may be configured for performing at least one precipitation process of one or more of catalysts, zeolites, battery material, pigments, crop-science materials. The term "precipitation" as used herein is a broad term and is to be given its ordinary and customary meaning to a person of ordinary skill in the art and is not to be limited to a special or customized meaning. The term specifically may refer, without limitation, to a process of generating of a solid from a solution. The chemical plant may be configured for mixing of at least two liquid streams such that supersaturation is created. The precipitation may comprise nucleation processes, particle growth and agglomeration processes. Moreover, further mechanisms may be considered such as aging and/or ripening, in particular phase transition of material into the thermodynamic stable form, and/or attrition and/or breakage, such as by collision with the stirrer and internals of the reactor.

The term "equipment", also denoted plant equipment, as used herein is a broad term and is to be given its ordinary and customary meaning to a person of ordinary skill in the art and is not to be limited to a special or customized meaning. The term specifically may refer, without limitation, to at least one component and/or element of the chemical plant. Specifically, the chemical plant may comprise at least one reactor, also denoted chemical reactor. The term "reactor" as used herein is a broad term and is to be given its ordinary and customary meaning to a person of ordinary skill in the art and is not to be limited to a special or customized meaning. The term specifically may refer, without limitation, to a process vessel configured for carrying out at least one chemical reaction. The reactor may comprise a plurality of components or elements such as at least one housing, at least one feed inlet, at least one outlet, at least one mixer, at least one mixing nozzle and the like. The reactor, in particular the housing, may have a geometry such as a cylinder geometry or barrel geometry. The reactor may have a size defined by a base area and height. The reactor may be configured for performing the at least one precipitation process.

The chemical plant may comprise at least one process chain. The term "process chain" as used herein is a broad term and is to be given its ordinary and customary meaning to a person of ordinary skill in the art and is not to be limited to a special or customized meaning. The term specifically may refer, without limitation, to a sequence of processes or production steps performed in at least one processing unit or in a plurality of processing units. The process chain may comprise steps or processes, which may be performed simultaneously and/or steps or processes which may be performed successively. The process chain may comprise at least one production line. The process chain may comprise multiple production lines, in particular multiple production lines, which can be operated in parallel. The process chain may comprise at least one batch process and/or at least one continuous process. The chemical plant may be configured for continuous processing and/or batch processing. The chemical plant may comprise a plurality of parallel continuous and/or batch processes. The term "batch process" as used herein is a broad term and is to be given its ordinary and customary meaning to a person of ordinary skill in the art and is not to be limited to a special or customized meaning. The term specifically may refer, without limitation, to a process wherein processing units are in chronological order and directly related to the production process. The term "continuous process" as used herein is a broad term and is to be given its ordinary and customary meaning to a person of ordinary skill in the art and is not to be limited to a special or customized meaning. The term specifically may refer, without limitation, to a flow production method without interruption.

Design of the chemical plant, in particular of the plant equipment, may be defined by a plant equipment layout. Specifically, physical properties of the realized plant equipment may be defined by physical properties of the plant equipment layout. The plant equipment layout may specify physical properties of the plant equipment. The plant equipment layout may specify one or more of: type of elements of the equipment, geometry of elements of the equipment, size of elements of the equipment, position of elements of the equipment, number of elements of the equipment, order of elements of the equipment, connection between elements, status of at least one element. For example, the plant equipment layout may comprise information about the chemical plant such design of the chemical plant and/or status such as in operation, in maintenance, maintenance planed, current operation status e.g. degradation status. The plant equipment layout may comprise real time data. The real time data may comprise information about a current state of the chemical plant. The plant equipment layout may comprise pre-defined layout parameters. For example, the pre-defined layout parameters may comprise one or more of geometry, specifications such as minimum temperature, maximum temperature, speed and the like. The design may comprise parameters specifying the physical reactor design at hand such as the reactor geometry, number of reactors, plant layout such as continuous process or batch process. The physical properties of plant equipment layout may comprise data of at least one of: reactor design; reactor geometry; reactor size; mixing nozzle design; mixer geometry; mixer position; feed supply; feed inlet design such as geometry and position; outlet design such as geometry and position.

The term "monitoring and/or controlling" as used herein is a broad term and is to be given its ordinary and customary meaning to a person of ordinary skill in the art and is not to be limited to a special or customized meaning. The term specifically may refer, without limitation, to determining and/or adapting and/or influencing at least one operating condition and/or at least one physical property of the equipment of the chemical plant. The term "operating condition" as used herein is a broad term and is to be given its ordinary and customary meaning to a person of ordinary skill in the art and is not to be limited to a special or customized meaning. The term specifically may refer, without limitation, to setting and/or configuration under which the production process, in particular the precipitation, is carried out. The operating conditions may comprise production process conditions for operating the chemical plant, in particular production process conditions for one or a plurality or even for all units of the chemical plant. The operating conditions of the production process may comprise physical conditions and chemical conditions. The operating conditions may comprise operating conditions for the reactor. The operating conditions may comprise at least one parameter selecting from the group consisting of: temperature; pressure; pH-value; viscosity; rotational speed of mixer; flow rate such as volumetric or mass flow rates; feed composition; feed mass flow; ingredients, concentration; order of additions; residence time, pressure.

The method comprises the following method steps which, specifically, may be performed in the given order. Still, a different order is also possible. It is further possible to perform two or more of the method steps fully or partially simultaneously. Further, one or more or even all of the method steps may be performed once or may be performed repeatedly, such as repeated once or several times. Further, the method may comprise additional method steps which are not listed.

The method comprises the following steps:
a) specifying at least one parameter of a production process to be optimized;
b) receiving input data via at least one input channel, wherein the input data comprises operating conditions of the production process, physical properties of a plant equipment layout, and at least one predicted parameter determined from a physico-chemical white box model, wherein the physico-chemical white box model comprises at least one thermodynamics model, at least one solid formation model and a computational fluid dynamics (CFD) based numerical simulation;
b) optimizing the specified parameter via at least one processing device, wherein the specified parameter is optimized by adapting the operating conditions of the production process and/or the physical properties of the plant equipment layout based on the predicted parameter.

The term "parameter of a production process" as used herein is a broad term and is to be given its ordinary and customary meaning to a person of ordinary skill in the art and is not to be limited to a special or customized meaning. The term specifically may refer, without limitation, to at an arbitrary parameter having an impact on the chemical product. The parameter to be optimized may be at least one physical property. The physical property may be one or more of: particle shape; particle size, particle size distribution; particle morphology.

The term "specifying" the parameter of a production process as used herein is a broad term and is to be given its ordinary and customary meaning to a person of ordinary skill in the art and is not to be limited to a special or customized meaning. The term specifically may refer, without limitation, to selecting one parameter of the production process.

The term "optimizing", also denoted optimization process, as used herein is a broad term and is to be given its ordinary and customary meaning to a person of ordinary skill in the art and is not to be limited to a special or customized meaning. The term specifically may refer, without limitation, to determining and/or selecting a best setting of a parameter or parameter value, in particular with regard to at least one criterion for the chemical product, from a possible parameter space.

The term "input channel" as used herein is a broad term and is to be given its ordinary and customary meaning to a person of ordinary skill in the art and is not to be limited to a special or customized meaning. The term specifically may refer, without limitation, to at least one interface such as a communication interface. The input channel may be an item or element forming a boundary configured for transferring information. In particular, the input channel may be configured for transferring information from a computational device, e.g. a computer, such as to send or output information, e.g. onto another device. Additionally or alternatively, the input channel may be configured for transferring information onto a computational device, e.g. onto a computer, such as to receive information. The input channel may specifically provide means for transferring or exchanging information. In particular, the input channel may provide a data transfer connection, e.g. Bluetooth, NFC, inductive coupling or the like. As an example, the input channel may be or may comprise at least one port comprising one or more of a network or internet port, a USB-port and a disk drive. The input channel may be at least one web interface. The receiving of the input data may comprise downloading the input data and/or retrieving the input data and/or entering the input data.

The term "input data" as used herein is a broad term and is to be given its ordinary and customary meaning to a person of ordinary skill in the art and is not to be limited to a special or customized meaning. The term specifically may refer, without limitation, to an arbitrary input or initial value for the optimization process. The input data comprises conditions of the production process, physical properties of a plant equipment layout, and at least one predicted parameter determined from the physico-chemical white box model. The input data may be retrieved from at least one database via the input channel. The term "database" as used herein is a broad term and is to be given its ordinary and customary meaning to a person of ordinary skill in the art and is not to be limited to a special or customized meaning. The term specifically may refer, without limitation, to an arbitrary collection of information, such as information stored in at least one data storage device. The database may comprise the at least one data storage device with the information stored therein. In particular, the database may contain an arbitrary collection of information. The database may be or may comprise at least one database selected from the group consisting of: at least one server, at least one server system comprising a plurality of servers, at least one cloud server or cloud computing infrastructure. The database may comprise at least one storage unit configured to store data.

The term "predicted parameter" as used herein is a broad term and is to be given its ordinary and customary meaning to a person of ordinary skill in the art and is not to be limited to a special or customized meaning. The term specifically may refer, without limitation, to a result of the physico-chemical white box model. The predicted parameter may be an expected value. The predicted parameter may comprise information about a predicted value of the parameter to be optimized and/or at least one predicted local and/or temporal and/or spatial condition of the equipment of the chemical plant and/or at least one predicted state of chemical and/or physical properties of the equipment of the chemical plant. Specifically, the predicted parameter may comprise information about a predicted value of the parameter to be optimized and/or at least one parameter selected from the group consisting of: local information about velocity, local information about pressure, local information about temperature, local information about supersaturation; information about pH-value; information about ς-potential; information about agglomeration tendency; information about temporal and spatial load in a reactor of the chemical plant. The predicted parameter may comprise information about one or more of where particles are created, which solid phase precipitates, where agglomeration and attrition dominates, how feeding and the mixing of the feed streams influences particle formation, optimizations of the status quo and the like.

The physico-chemical white box model may comprise at least one model of at least one precipitation process. The term "physico-chemical white box model" as used herein is a broad term and is to be given its ordinary and customary meaning to a person of ordinary skill in the art and is not to be limited to a special or customized meaning. The term specifically may refer, without limitation, to a mathematical model based on physico-chemical laws. The physico-chemical laws may be derived from first principles. The physico-chemical laws may comprise one or more of thermodynamics, in particular thermodynamics having one or more supersaturated phases which precipitate as solid, reaction kinetics, solid formation kinetics, conservation laws of mass, momentum and energy, particle population in arbitrary dimension.

The method further may comprise at least one prediction step. In the prediction step, the at least one predicted parameter may be determined from the physico-chemical white box model, wherein the operating conditions and plant equipment layout, in particular the initial value of the operating conditions and plant equipment layout, may be used as input for the physico-chemical white box model.

The physico-chemical white box model comprises at least one thermodynamics model, at least one solid formation model and a computational fluid dynamics (CFD) based numerical simulation.

The thermodynamics model may comprise at least one database and at least one solver. The solver may be configured for handling complex equilibria and solubility products for electrolytes. For example, the solver may be configured for handling carbonic acid equilibrium, which can be superposed by numerous other equilibria of ions. With respect to thermodynamics model reference is made to e.g. https://wwwbrr.cr.usgs.gov/projects/GWC_coupled/phreeqc.v1/, or Hartig et al. "Multi-component and multi-phase population balance model: The case of Georgeite formation as methanol catalyst precursor phase", Chemical EngineeringScience109(2014)158-170, or Schindler et al. "Zur Thermodynamik der Metallcarbonate, Löslichkeitskonstanten und Freie Bildungsenthalpien von Cu2(OH)2CO3(Malachit) und Cu3(OH)2(CO3)2(Azurit) bei 25 °C", Helvetica Chimica- Volumen 51, Fasciculus. The thermodynamics model may be configured for coupling to other software such as to Matlab, Ansys Fluent, and the like. The method may comprise at least one model preparation step. The model preparation step may comprise preparing, in particular calibrating, the thermodynamics model. The thermodynamics model may be calibrated by using information from literature, solubility products, and complex formation constants. Additionally or alternatively, the thermodynamics model may be calibrated by using information from solubility measurements in a mother liquor, and the like.

The at least one solid formation model may be based at least partially on experimental data. The model preparation step may comprise preparing, in particular calibrating, the solid formation model. The solid formation model may comprise at least one first model part relating to primary mechanisms such as nucleation and growth. The solid formation model may comprise at least one second model part relating to secondary mechanisms such as agglomeration and/or aging and/or attrition. With respect to solid formation model reference is made to e.g. Kügler et al. "On Precipitation of Sparingly Soluble Fluoride Salts", Cryst. Growth Des. 2018, 18, 2, 728-733, December 13, 2017, https://doi.org/10.1021/acs.cgd.7b01115. With respect to primary mechanisms, the solid formation model may be prepared by using information from non-mixing influenced experiments with a mixing nozzle and fitting of rigorous, physical models with one single fit parameter adapted with one-dimensional population balance to experimentally achieved particle sizes. With respect to secondary mechanisms, the solid formation model may be prepared by using information from tailored experiments. For example, information about agglomeration and/or aging may be determined in an aging vessel with a defined initial particle size distribution by measuring agglomeration tendency and fitting of agglomeration kernel for the population balance. For example, information about attrition may be determined in a high shear cell with defined energy input and fitting of attrition kernel for the population balance.

The physico-chemical white box model, in particular the CFD based numerical simulation, may be configured for modelling of the precipitation process by means of population balances. The CFD based numerical simulation may comprise at least one population balance model. The population balance model may comprise population balance equations (PBEs) which describe evolution of a population of particles. Specifically, the PBEs describe the precipitation process and its subprocesses such as nucleation, agglomeration, breakage, and the like. The CFD based numerical simulation may comprise a 3D CFD hydrodynamic calculation of a flow field of a precipitation reactor. Different software for CFD based numerical simulation are available, e.g. commercial solver - Ansys Fluent or STAR CCM or non-commercial solver OpenFoam. With respect to CFD based numerical simulation reference is made to e.g. Marchisio et al. "Quadrature method of moments for population-balance equations", April 16, 2004, https://doi.org/10.1002/aic.690490517, Anderson et al. "Predicting crystal growth via a unified kinetic three-dimensional partition model", Nature 544, 456-459 (2017); https://doi.org/10.1038/nature21684, Choi et al. "Investigation of Crystallization in a Jet Y-Mixer by a Hybrid Computational Fluid Dynamics and Process Simulation Approach", Crystal Growth & Design 2005, 5, 3, 959-968, April 9, 2005, https://doi.org/10.1021/cg049670x, Gavi et al. "CFD Modelling of Nano-Particle Precipitation in Confined Impinging Jet Reactors", Chemical Engineering Research and Design, Volume 85, Issue 5, 2007, Pages 735-744, https://doi.org/10.1205/cherd06176, Cheng et al. "CFD-PBE simulation of premixed continuous precipitation incorporating nucleation, growth and aggregation in a stirred tank with multi-class method", Chemical Engineering Science, Volume 68, Issue 1, 22 January 2012, Pages 469-480, https://doi.org/10.1016/j.ces.2011.10.032. The model preparation step may comprise preparing the CFD based numerical simulation.

Specifically, the physico-chemical white box model may comprise a combined model, wherein in the combined model the thermodynamics model, the solid formation model and the CFD based numerical simulation are coupled. Specifically, the thermodynamics model and the solid formation kinetics may be coupled to the CFD based numerical simulation. For example, the physico-chemical white box model may be designed as follows. The CFD based numerical simulation may comprise as input involved ions and/or compounds and inertia as scalar equations. Each component refers to a scalar equation of the CFD or may be a closing condition (sum of all components = 1) or may be calculated from stoichiometry. The CFD based numerical simulation may be configured for calculating local mixing conditions, especially in the feed zone. The physico-chemical white box model may comprise a coupling of the thermodynamics model to the CFD based numerical simulation. The coupled thermodynamics model and CFD based numerical simulation may be configured for calculating of one or more of pH, composition, supersaturation and other quantities of interest in every grid cell and/or in at least one zone of interest. The physico-chemical white box model may comprise a coupling of the solid formation model to the CFD based numerical simulation. The coupled solid formation model and CFD based numerical simulation may be configured for calculating in every grid cell and/or in at least one zone of interest, an evolution of either the moments of the particle size distribution, e.g. by using a Quadrature Method of Moments (QMOM) or direct QMOM or with a class-based approach. By use of this method, local knowledge on solid formation in precipitation reactors is achieved.

The term "processing device" as used herein is a broad term and is to be given its ordinary and customary meaning to a person of ordinary skill in the art and is not to be limited to a special or customized meaning. The term specifically may refer, without limitation, to an arbitrary device adapted to perform the optimization process, preferably by using at least one processor and/or at least one application-specific integrated circuit. Thus, as an example, the processing device may comprise one or more programmable devices such as one or more computers, application-specific integrated circuits (ASICs), Field Programmable Gate Arrays (FPGAs), or other devices which are configured for performing the above-mentioned prediction. Thus, as an example, the at least one processing device may have a software code stored thereon comprising a number of computer commands. The processing device may provide one or more hardware elements for performing one or more of the named operations and/or may provide one or more processors with software running thereon for performing one or more of the named operations.

The specified parameter is optimized by adapting the operating conditions of the production process and/or the physical properties of the plant equipment layout based on the predicted parameter. The optimizing may comprise comparing the predicted parameter to at least one threshold and/or at least one tolerance range. In case the predicted parameter is below or above the threshold and/or deviates from the tolerance range, the operating conditions and/or the physical properties of the plant equipment layout may be adapted depending on the comparison. For example, the predicted parameter may comprise local information about supersaturation for a mixing nozzle design. The mixing nozzle design may comprise a relative position or offset of mixer and mixing nozzle. In addition to the local information about supersaturation, the predicted parameter may comprise information of the particle size. The physico-chemical white box model may predict that for large offsets the supersaturation is low resulting in larger particles and that for smaller offsets the supersaturation is high resulting in smaller particles. The local information about supersaturation may be used to optimize the offset of mixer and mixing nozzle depending on the desired particle size of the chemical product.

The method may comprise at least one validation step, wherein the prediction step is repeated with adapted input, in particular with the optimized parameter. The method may comprise repeating method steps a) to c) for further optimizing the specified parameter and/or optimizing at least one further parameter.

The information about the predicted value of the parameter to be optimized and/or the predicted local and/or temporal and/or spatial condition of chemical and/or physical properties of the equipment of the chemical plant and/or at least one predicted state of the equipment of the chemical plant may allow precise adjusting of the respective parameters. In particular, the method may allow understanding technical precipitation processes in the chemical industry and understanding coherences between process and product. Improved process control may be possible. The method may allow model-predictive control of processes, leading to optimal process windows for the desired material. Moreover, the method may allow using less resources in downstream processing. Specifically, less wash water may be required by preventing formation of undesired solid phases e.g. by adjusting the pH during precipitation, according to thermodynamics model. Specifically, lower calcination temperatures may be possible e.g. by generating nano-disperse particles with lower melting point. Specifically, improved solid handling may be possible by avoiding solid phases that lead to poor flowability. Improvement of recipes may be possible such as by controlled Co-precipitation of multiple solid phases, prediction of yield and composition of particles. Moreover, transfer of recipes may be possible. Less trial and error may be required such that the method allows saving resources, in particular less off-spec material or waste produced and less manufacturing or cleaning afford by non-working recipes is needed. Moreover, tuning of material properties may be possible by controlling of local supersaturation, in particular by monitoring parameters such as particle size distribution, BET-surface according to Brunauer-Emmett-Teller (BET), tap density, or filter resistance.

In a further aspect of the invention, a computer-implemented method for designing plant equipment layout of a chemical plant is proposed. The method comprises the following method steps which, specifically, may be performed in the given order. Still, a different order is also possible. It is further possible to perform two or more of the method steps fully or partially simultaneously. Further, one or more or even all of the method steps may be performed once or may be performed repeatedly, such as repeated once or several times. Further, the method may comprise additional method steps which are not listed.

The method comprises the following steps:
i) specifying at least one parameter of a production process to be optimized;
ii) receiving input data via at least one input channel, wherein the input data comprises operating conditions of the production process, physical properties of a start plant equipment layout, and at least one predicted parameter determined from a physico-chemical white box model, wherein the physico-chemical white box model comprises at least one thermodynamics model, at least one solid formation model and a computational fluid dynamics (CFD) based numerical simulation;
iii) optimizing the specified parameter via at least one processing device, wherein the specified parameter is optimized by adapting the physical properties of the start plant equipment layout based on the predicted parameter;
iv) determining a target plant equipment layout based on the adapted set of physical properties of the start plant equipment layout data;
v) providing the target plant equipment layout.

With respect to definitions and embodiments of the method for designing reference is made to definitions and embodiments of the method for monitoring and/or controlling.

The term "start plant equipment layout" as used herein is a broad term and is to be given its ordinary and customary meaning to a person of ordinary skill in the art and is not to be limited to a special or customized meaning. The term specifically may refer, without limitation, to an initial value of the plant equipment layout to be adapted in the method for designing. The term "target plant equipment layout" as used herein is a broad term and is to be given its ordinary and customary meaning to a person of ordinary skill in the art and is not to be limited to a special or customized meaning. The term specifically may refer, without limitation, to the adapted plant equipment layout.

The method may comprise specifying the production process. For example, the production process may be at least one precipitation process of one or more of catalysts, zeolites, battery material, pigments, crop-science materials.

The term "providing the target plant equipment layout" may refer to generating at least one output, in particular to at least one designed of the plant equipment layout. The target plant equipment layout may be provided via at least one output channel. The output channel may comprise at least one output device. The term "output device" as used herein is a broad term and is to be given its ordinary and customary meaning to a person of ordinary skill in the art and is not to be limited to a special or customized meaning. The term specifically may refer, without limitation, to a device configured for providing at least one information to a user. The output device may comprise at least one display device. The method may comprise using a designing system, such as the designing system described in more details below. The chemical plant may be designed according to the determined target plant equipment layout.

The method may comprise up-scaling or down-scaling the target plant equipment layout. The method may allow model-based conception and design of precipitation assets. Specifically, a transfer from lab to process by scale-up or scale-down may be possible. This may allow shortening of transfer times from lab to pilot or production. Design of new reactor concepts may be possible by understanding the coherences between flow field and thermodynamics and solid formation. For example, if particle formation is restricted to a certain area in the reactor, a new design can be worked out to intensify this local spot.

In a further aspect of the invention, a computer program, specifically an application, for controlling and/or monitoring equipment of a chemical plant is proposed, wherein the computer program comprises instructions which, when the program is executed by a computer or computer network, cause the computer or computer network to carry out the following steps:
A) specifying at least one parameter of a production process to be optimized;
B) receiving input data via at least one input channel, wherein the input data comprises operating conditions of the production process, physical properties of a plant equipment layout, and at least one predicted parameter determined from a physico-chemical white box model, wherein the physico-chemical white box model comprises at least one thermodynamics model, at least one solid formation model and a computational fluid dynamics (CFD) based numerical simulation;
C) optimizing the specified parameter via at least one processing device, wherein the specified parameter is optimized by adapting the operating conditions of the production process and/or the physical properties of the plant equipment layout based on the predicted parameter.

For possible definitions of most of the terms used herein, reference may be made to the description of the computer implemented method for controlling and/or monitoring above or as described in further detail below.

Specifically, the computer program may be stored on a computer-readable data carrier and/or on a computer-readable storage medium. As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Further disclosed and proposed herein is a computer program product having program code means, in order to perform for controlling and/or monitoring equipment of a chemical plant according to the present invention in one or more of the embodiments enclosed herein when the program is executed on a computer or computer network. Specifically, the program code means may be stored on a computer-readable data carrier and/or computer-readable storage medium. Further disclosed and proposed herein is a data carrier having a data structure stored thereon, which, after loading into a computer or computer network, such as into a working memory or main memory of the computer or computer network, may execute the method for determining for controlling and/or monitoring according to one or more of the embodiments disclosed herein.

Further disclosed and proposed herein is a computer program product with program code means stored on a machine-readable carrier, in order to perform the method for controlling and/or monitoring according to one or more of the embodiments disclosed herein, when the program is executed on a computer or computer network. As used herein, a computer program product refers to the program as a tradable product. The product may generally exist in an arbitrary format, such as in a paper format, or on a computer-readable data carrier. Specifically, the computer program product may be distributed over a data network.

In a further aspect of the invention, a computer program, specifically an application, for designing plant equipment layout of a chemical plant is proposed, wherein the computer program comprises instructions which, when the program is executed by a computer or computer network, cause the computer or computer network to carry out the following steps:
I) specifying at least one parameter of a production process to be optimized;
II) receiving input data via at least one input channel, wherein the input data comprises operating conditions of the production process, physical properties of a start plant equipment layout, and at least one predicted parameter determined from a physico-chemical white box model, wherein the physico-chemical white box model comprises at least one thermodynamics model, at least one solid formation model and a computational fluid dynamics (CFD) based numerical simulation;
III) optimizing the specified parameter via at least one processing device, wherein the specified parameter is optimized by adapting the physical properties of the start plant equipment layout based on the predicted parameter;
IV) determining a target plant equipment layout based on the adapted set of physical properties of the start plant equipment layout data;
V) providing the target plant equipment layout.

For possible definitions of most of the terms used herein, reference may be made to the description of the computer implemented method for controlling and/or monitoring and of the computer implemented method for designing above or as described in further detail below.

Specifically, the computer program may be stored on a computer-readable data carrier and/or on a computer-readable storage medium. As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Further disclosed and proposed herein is a computer program product having program code means, in order to perform the method for designing according to the present invention in one or more of the embodiments enclosed herein when the program is executed on a computer or computer network. Specifically, the program code means may be stored on a computer-readable data carrier and/or computer-readable storage medium.

Further disclosed and proposed herein is a data carrier having a data structure stored thereon, which, after loading into a computer or computer network, such as into a working memory or main memory of the computer or computer network, may execute the method for designing according to one or more of the embodiments disclosed herein.

Further disclosed and proposed herein is a computer program product with program code means stored on a machine-readable carrier, in order to perform the method for designing according to one or more of the embodiments disclosed herein, when the program is executed on a computer or computer network. As used herein, a computer program product refers to the program as a tradable product. The product may generally exist in an arbitrary format, such as in a paper format, or on a computer-readable data carrier. Specifically, the computer program product may be distributed over a data network.

In a further aspect of the invention, a controlling system for controlling and/or monitoring equipment of a chemical plant is proposed. The controlling system comprises at least one communication interface configured for specifying at least one parameter of a production process to be optimized. The controlling system comprises at least one input channel configured for receiving input data, wherein the input data comprises operating conditions of the production process, physical properties of a plant equipment layout, and at least one predicted parameter determined from a physico-chemical white box model. The physico-chemical white box model comprises at least one thermodynamics model, at least one solid formation model and a computational fluid dynamics (CFD) based numerical simulation. The controlling system comprises at least one processing device configured for optimizing the specified parameter. The processing device is configured for optimizing the specified parameter by adapting the operating conditions of the production process and/or the physical properties of the plant equipment layout based on the predicted parameter.

The controlling system may be configured for performing the method for controlling and/or monitoring according to the present invention. For possible definitions of most of the terms used herein, reference may be made to the description of the computer implemented method for controlling and/or monitoring above or as described in further detail below.

In a further aspect of the invention, a designing system for designing plant equipment layout of a chemical plant is proposed. The designing system comprises at least one communication interface configured for specifying at least one parameter of a production process to be optimized. The designing system comprises at least one input channel configured for receiving input data. The input data comprises operating conditions of the production process, physical properties of a start plant equipment layout, and at least one predicted parameter determined from a physico-chemical white box model. The physico-chemical white box model comprises at least one thermodynamics model, at least one solid formation model and a computational fluid dynamics (CFD) based numerical simulation. The designing system comprises at least one processing device configured for optimizing the specified parameter. The processing device is configured for optimizing the specified parameter by adapting the physical properties of the start plant equipment layout based on the predicted parameter. The processing device is configured for determining a target plant equipment layout based on the adapted set of physical properties of the start plant equipment layout data. The designing system comprises at least one output device. The output device is configured for providing the target plant equipment layout.

The designing system may be configured for performing the method for designing according to the present invention. For possible definitions of most of the terms used herein, reference may be made to the description of the computer implemented method for designing above or as described in further detail below.

As used herein, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically are used only once when introducing the respective feature or element. Herein, in most cases, when referring to the respective feature or element, the expressions "at least one" or "one or more" are not repeated, non-withstanding the fact that the respective feature or element may be present once or more than once.

Further, as used herein, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

Summarizing and without excluding further possible embodiments, the following embodiments may be envisaged:
Embodiment 1: A computer-implemented method for controlling and/or monitoring equipment of a chemical plant, wherein the method comprises the following steps:
   a) specifying at least one parameter of a production process to be optimized;
   b) receiving input data via at least one input channel, wherein the input data comprises operating conditions of the production process, physical properties of a plant equipment layout, and at least one predicted parameter determined from a physico-chemical white box model, wherein the physico-chemical white box model comprises at least one thermodynamics model, at least one solid formation model and a computational fluid dynamics (CFD) based numerical simulation;
   b) optimizing the specified parameter via at least one processing device, wherein the specified parameter is optimized by adapting the operating conditions of the production process and/or the physical properties of the plant equipment layout based on the predicted parameter.
Embodiment 2: The method according to the preceding embodiment, wherein the chemical plant comprises at least one reactor, wherein the reactor is configured for performing at least one precipitation process.
Embodiment 3: The method according to any one of the preceding embodiments, wherein the parameter to be optimized is at least one physical property of the equipment of the chemical plant.
Embodiment 4: The method according to any one of the preceding embodiments, wherein the predicted parameter comprises information about a predicted value of the parameter to be optimized and/or at least one predicted local and/or temporal and/or spatial condition of chemical and/or physical properties of the equipment of the chemical plant and/or at least one predicted state of the equipment of the chemical plant.
Embodiment 5: The method according to any one of the preceding embodiments, wherein the operating conditions of the production process comprise at least one parameter selecting from the group consisting of: temperature; pressure; pH-value; viscosity; rotational speed of mixer; flow rate; feed composition; feed mass flow; ingredients, concentration; order of additions.
Embodiment 6: The method according to any one of the preceding embodiments, wherein the plant equipment layout specifies physical properties of the equipment of the chemical plant.
Embodiment 7: The method according to any one of the preceding embodiments, wherein the physico-chemical white box model comprises at least one model of at least one precipitation process.
Embodiment 8: The method according to any one of the preceding embodiments, wherein the method further comprises at least one prediction step, wherein, in the prediction step, the at least one predicted parameter is determined from the physico-chemical white box model, wherein the operating conditions and plant equipment layout are used as input for the physico-chemical white box model.
Embodiment 9: The method according to the preceding embodiment, wherein the at least one solid formation model is based at least partially on experimental data.
Embodiment 10: A computer-implemented method for designing plant equipment layout of a chemical plant, wherein the method comprises the following steps:
   i) specifying at least one parameter of a production process to be optimized;
   ii) receiving input data via at least one input channel, wherein the input data comprises operating conditions of the production process, physical properties of a start plant equipment layout, and at least one predicted parameter determined from a physico-chemical white box model, wherein the physico-chemical white box model comprises at least one thermodynamics model, at least one solid formation model and a computational fluid dynamics (CFD) based numerical simulation;
   iii) optimizing the specified parameter via at least one processing device, wherein the specified parameter is optimized by adapting the physical properties of the start plant equipment layout based on the predicted parameter;
   iv) determining a target plant equipment layout based on the adapted set of physical properties of the start plant equipment layout data;
   v) providing the target plant equipment layout.
Embodiment 11: The method according to the preceding embodiment, wherein the method comprises up-scaling or down-scaling the target plant equipment layout.
Embodiment 12: The method according to any one of the preceding embodiments referring to a method for designing plant equipment layout, wherein the method comprises specifying the production process.
Embodiment 13: The method according to any one of the preceding embodiments referring to a method for designing plant equipment layout, wherein the chemical plant comprises at least one reactor, wherein the reactor is configured for performing at least one precipitation process.
Embodiment 14: The method according to any one of the preceding embodiments referring to a method for designing plant equipment layout, wherein the parameter to be optimized is at least one physical property of the equipment of the chemical plant.
Embodiment 15: The method according to any one of the preceding embodiments referring to a method for designing plant equipment layout, wherein the predicted parameter comprises information about a predicted value of the parameter to be optimized and/or at least one predicted local and/or temporal and/or spatial condition of chemical and/or physical properties of the equipment of the chemical plant and/or at least one predicted state of the equipment of the chemical plant.
Embodiment 16: The method according to any one of the preceding embodiments referring to a method for designing plant equipment layout, wherein the operating conditions of the production process comprise at least one parameter selecting from the group consisting of: temperature; pressure; pH-value; viscosity; rotational speed of mixer; flow rate; feed composition; feed mass flow; ingredients, concentration; order of additions.
Embodiment 17: The method according to any one of the preceding embodiments referring to a method for designing plant equipment layout, wherein the plant equipment layout specifies physical properties of the equipment of the chemical plant.
Embodiment 18: The method according to any one of the preceding embodiments referring to a method for designing plant equipment layout, wherein the physico-chemical white box model comprises at least one model of at least one precipitation process.
Embodiment 19: The method according to any one of the preceding embodiments referring to a method for designing plant equipment layout, wherein the method further comprises at least one prediction step, wherein, in the prediction step, the at least one predicted parameter is determined from the physico-chemical white box model, wherein the operating conditions and plant equipment layout are used as input for the physico-chemical white box model.
Embodiment 20: The method according to the preceding embodiment, wherein the at least one solid formation model is based at least partially on experimental data.
Embodiment 21: A computer program, specifically an application, for controlling and/or monitoring equipment of a chemical plant, wherein the computer program comprises instructions which, when the program is executed by a computer or computer network, cause the computer or computer network to carry out the following steps:
   A) specifying at least one parameter of a production process to be optimized;
   B) receiving input data via at least one input channel, wherein the input data comprises operating conditions of the production process, physical properties of a plant equipment layout, and at least one predicted parameter determined from a physico-chemical white box model, wherein the physico-chemical white box model comprises at least one thermodynamics model, at least one solid formation model and a computational fluid dynamics (CFD) based numerical simulation;
   C) optimizing the specified parameter via at least one processing device, wherein the specified parameter is optimized by adapting the operating conditions of the production process and/or the physical properties of the plant equipment layout based on the predicted parameter.
Embodiment 22: A computer program, specifically an application, for designing plant equipment layout of a chemical plant, wherein the computer program comprises instructions which, when the program is executed by a computer or computer network, cause the computer or computer network to carry out the following steps:
   I) specifying at least one parameter of a production process to be optimized;
   II) receiving input data via at least one input channel, wherein the input data comprises operating conditions of the production process, physical properties of a start plant equipment layout, and at least one predicted parameter determined from a physico-chemical white box model, wherein the physico-chemical white box model comprises at least one thermodynamics model, at least one solid formation model and a computational fluid dynamics (CFD) based numerical simulation;
   III) optimizing the specified parameter via at least one processing device, wherein the specified parameter is optimized by adapting the physical properties of the start plant equipment layout based on the predicted parameter;
   IV) determining a target plant equipment layout based on the adapted set of physical properties of the start plant equipment layout data;
   V) providing the target plant equipment layout.
Embodiment 23: A controlling system for controlling and/or monitoring equipment of a chemical plant, wherein the controlling system comprises at least one communication interface configured for specifying at least one parameter of a production process to be optimized, wherein the controlling system comprises at least one input channel configured for receiving input data, wherein the input data comprises operating conditions of the production process, physical properties of a plant equipment layout, and at least one predicted parameter determined from a physico-chemical white box model, wherein the physico-chemical white box model comprises at least one thermodynamics model, at least one solid formation model and a computational fluid dynamics (CFD) based numerical simulation, wherein the controlling system comprises at least one processing device configured for optimizing the specified parameter, wherein the processing device is configured for optimizing the specified parameter by adapting the operating conditions of the production process and/or the physical properties of the plant equipment layout based on the predicted parameter.
Embodiment 24: The controlling system according to the preceding embodiment, wherein the controlling system is configured for performing the method for controlling and/or monitoring according to any one of the preceding embodiments referring to a method for controlling and/or monitoring.
Embodiment 25: A designing system for designing plant equipment layout of a chemical plant, wherein the designing system comprises at least one communication interface configured for specifying at least one parameter of a production process to be optimized, wherein the designing system comprises at least one input channel configured for receiving input data, wherein the input data comprises operating conditions of the production process, physical properties of a start plant equipment layout, and at least one predicted parameter determined from a physico-chemical white box model, wherein the physico-chemical white box model comprises at least one thermodynamics model, at least one solid formation model and a computational fluid dynamics (CFD) based numerical simulation, wherein the designing system comprises at least one processing device configured for optimizing the specified parameter, wherein the processing device is configured for optimizing the specified parameter by adapting the physical properties of the start plant equipment layout based on the predicted parameter, wherein the processing device is configured for determining a target plant equipment layout based on the adapted set of physical properties of the start plant equipment layout data, wherein the designing system comprises at least one output device, wherein the output device is configured for providing the target plant equipment layout.
Embodiment 26: The designing system according to the preceding embodiment, wherein the designing system is configured for performing the method for designing according to any one of the preceding embodiments referring to a method for designing.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figures 1A and 1B: show embodiments of an exemplary method for controlling and/or monitoring equipment of a chemical plant and of an exemplary method for designing plant equipment layout of a chemical plant according to the present invention;
- Figures 2A and 2B: show an embodiment of a reactor of the chemical plant and simulation result of a precipitation process;
- Figures 3A to 3C: shows an embodiment of experimental setup of calibration of solid formation kinetics and experimental results;
- Figures 4A and 4B: shows experimental results showing impact of supersaturation and pH-value on particle size; and
- Figure 5: shows an embodiment of a controlling system and a designing system according to the present invention.

### Detailed description of the embodiments

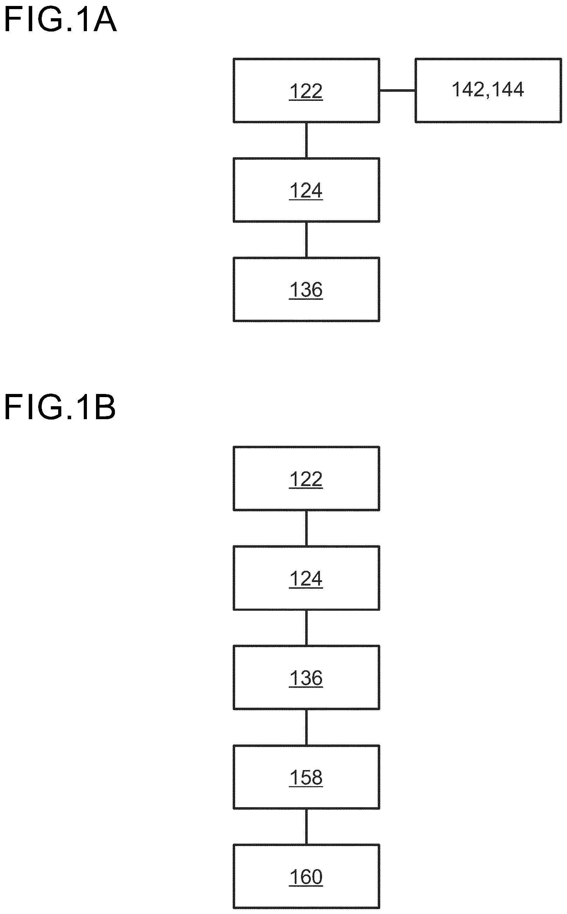

Figure 1A shows an embodiment of an exemplary computer-implemented method for controlling and/or monitoring equipment 110 of a chemical plant according to the present invention. The chemical plant may be a device or system of devices or complex of devices for producing and/or manufacturing and/or generating and/or processing at least one chemical product. The chemical plant may be configured for performing at least one production process. In particular, the chemical plant may be configured for producing catalysts, zeolites, battery material, pigments, crop-science materials. For example, catalysts e.g. (Co-) precipitated metal hydroxides, carbonates, zeolites e.g. Chabazite, MOFs, Pigments e.g. TiO2, BaSO4, Crop Science e.g. non-polar large organic molecules for crop protection precipitated in aqueous phase may be produced. The chemical plant may be configured for performing at least one precipitation process of one or more of catalysts, zeolites, battery material, pigments, crop-science materials. The precipitation may comprise nucleation processes, particle growth and agglomeration processes. Moreover, further mechanisms may be considered such as aging and/or ripening, in particular phase transition of material into the thermodynamic stable form, and/or attrition and/or breakage, such as by collision with the stirrer and internals of the reactor.

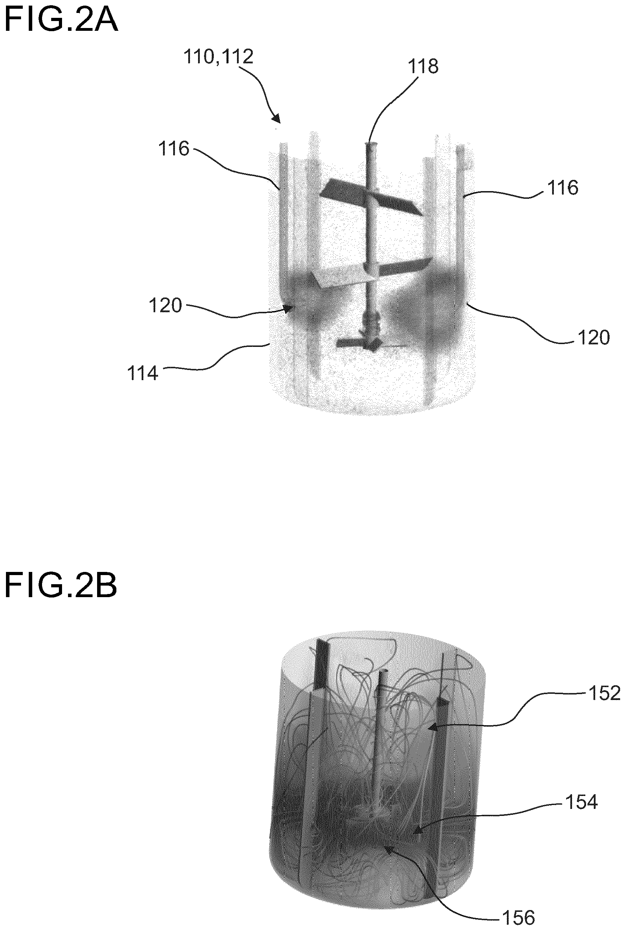

The equipment 110 may be at least one component and/or element of the chemical plant. Specifically, the chemical plant may comprise at least one reactor 112. An embodiment of a reaction 112 is shown in Figure 2A. The reactor 112 may comprise a plurality of components or elements such as at least one housing 114, at least one feed inlet 116, at least one outlet, at least one mixer 118, at least one mixing nozzle 120 and the like. The reactor 112, in particular the housing 114, may have a geometry such as a cylinder geometry or barrel geometry. The reactor 112 may have a size defined by a base area and height. The reactor 112 may be configured for performing the at least one precipitation process.

The chemical plant may comprise at least one process chain. The process chain may comprise a sequence of processes or production steps performed in at least one processing unit or in a plurality of processing units. The process chain may comprise steps or processes, which may be performed simultaneously and/or steps or processes which may be performed successively. The process chain may comprise at least one production line. The process chain may comprise multiple production lines, in particular multiple production lines, which can be operated in parallel. The process chain may comprise at least one batch process and/or at least one continuous process. The chemical plant may be configured for continuous processing and/or batch processing. The chemical plant may comprise a plurality of parallel continuous and/or batch processes.

Design of the chemical plant, in particular of the plant equipment 110, may be defined by a plant equipment layout. Specifically, physical properties of the realized plant equipment 110 may be defined by physical properties of the plant equipment layout. The plant equipment layout may specify physical properties of the plant equipment 110. The plant equipment layout may specify one or more of: type of elements of the equipment 110, geometry of elements of the equipment 110, size of elements of the equipment 110, position of elements of the equipment 110, number of elements of the equipment 110, order of elements of the equipment 110, connection between elements, status of at least one element. For example, the plant equipment layout may comprise information about the chemical plant such design of the chemical plant and/or status such as in operation, in maintenance, maintenance planed, current operation status e.g. degradation status. The plant equipment layout may comprise real time data. The real time data may comprise information about a current state of the chemical plant. The plant equipment layout may comprise pre-defined layout parameters. For example, the pre-defined layout parameters may comprise one or more of geometry, specifications such as minimum temperature, maximum temperature, speed and the like. The design may comprise parameters specifying the physical reactor design at hand such as the reactor geometry, number of reactors, plant layout such as continuous process or batch process. The physical properties of plant equipment layout may comprise data of at least one of: reactor design; reactor geometry; reactor size; mixing nozzle design; mixer geometry; mixer position; feed supply; feed inlet design such as geometry and position; outlet design such as geometry and position.

The monitoring and/or controlling may comprise determining and/or adapting and/or influencing at least one operating condition and/or at least one physical property of the equipment 110 of the chemical plant. The operating conditions may be a setting and/or configuration under which the production process, in particular the precipitation, is carried out. The operating conditions may comprise production process conditions for operating the chemical plant, in particular production process conditions for one or a plurality or even for all units of the chemical plant. The operating conditions of the production process may comprise physical conditions and chemical conditions. The operating conditions may comprise operating conditions for the reactor 110. The operating conditions may comprise at least one parameter selecting from the group consisting of: temperature; pressure; pH-value; viscosity; rotational speed of mixer; flow rate such as volumetric or mass flow rates; feed composition; feed mass flow; ingredients, concentration; order of additions; residence time, pressure.

The method comprises the following steps:
a) (denoted with reference number 122) specifying at least one parameter of a production process to be optimized;
b) (denoted with reference number 124) receiving input data via at least one input channel 126, wherein the input data comprises operating conditions of the production process, physical properties of a plant equipment layout, and at least one predicted parameter determined from a physico-chemical white box model 128, wherein the physico-chemical white box model comprises at least one thermodynamics model 130, at least one solid formation model 132 and a computational fluid dynamics (CFD) based numerical simulation 134;
c) (denoted with reference number 136) optimizing the specified parameter via at least one processing device 138, wherein the specified parameter is optimized by adapting the operating conditions of the production process and/or the physical properties of the plant equipment layout based on the predicted parameter.

The parameter to be optimized may be at least one physical property. The physical property may be one or more of: particle shape; particle size, particle size distribution; particle morphology. The optimizing may comprise determining and/or selecting a best setting of a parameter or parameter value, in particular with regard to at least one criterion for the chemical product, from a possible parameter space, also denoted parameter window.

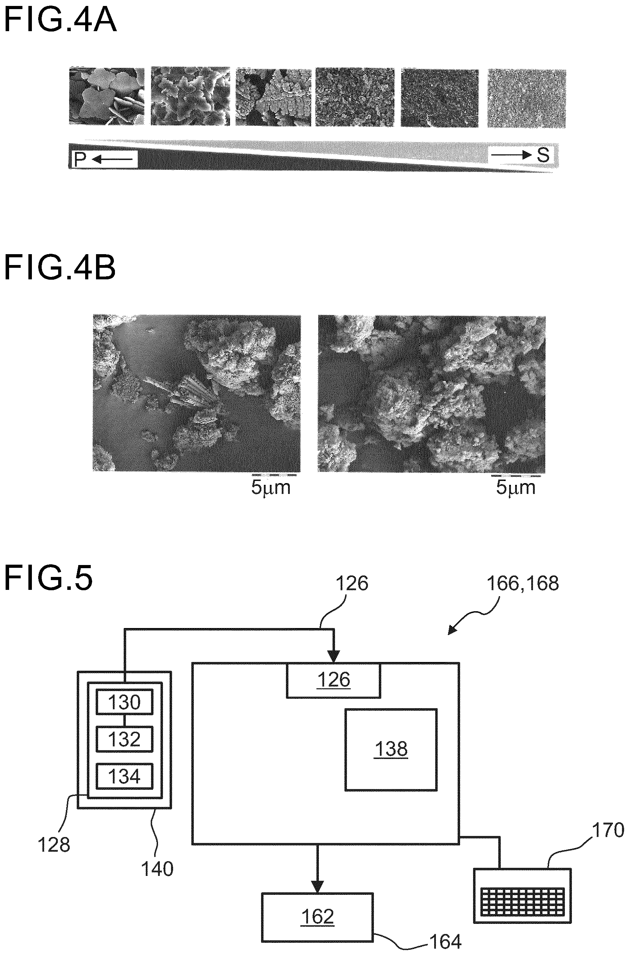

The input channel 126, as shown in Figure 5, may be or may comprise at least one interface such as a communication interface. The input channel 126 may be an item or element forming a boundary configured for transferring information. In particular, the input channel 126 may be configured for transferring information from a computational device, e.g. a computer, such as to send or output information, e.g. onto another device. Additionally or alternatively, the input channel 126 may be configured for transferring information onto a computational device, e.g. onto a computer, such as to receive information. The input channel 126 may specifically provide means for transferring or exchanging information. In particular, the input channel may provide a data transfer connection, e.g. Bluetooth, NFC, inductive coupling or the like. As an example, the input channel 126 may be or may comprise at least one port comprising one or more of a network or internet port, a USB-port and a disk drive. The input channel 126 may be at least one web interface. The receiving of the input data may comprise downloading the input data and/or retrieving the input data and/or entering the input data.

The input data may be or may comprise an arbitrary input or initial value for the optimization process. The input data comprises conditions of the production process, physical properties of a plant equipment layout, and at least one predicted parameter determined from the physico-chemical white box model. The input data may be retrieved from at least one database 140 via the input channel 126. The database 140 may comprise the at least one data storage device with the information stored therein. In particular, the database 140 may contain an arbitrary collection of information. The database 140 may be or may comprise at least one database selected from the group consisting of: at least one server, at least one server system comprising a plurality of servers, at least one cloud server or cloud computing infrastructure. The database 140 may comprise at least one storage unit configured to store data.

The predicted parameter may be a result of the physico-chemical white box model 128. The predicted parameter may be an expected value. The predicted parameter may comprise information about a predicted value of the parameter to be optimized and/or at least one predicted local and/or temporal and/or spatial condition of the equipment of the chemical plant and/or at least one predicted state of chemical and/or physical properties of the equipment 110 of the chemical plant. Specifically, the predicted parameter may comprise information about a predicted value of the parameter to be optimized and/or at least one parameter selected from the group consisting of: local information about velocity, local information about pressure, local information about temperature, local information about supersaturation; information about pH-value; information about ς-potential; information about agglomeration tendency; information about temporal and spatial load in a reactor of the chemical plant. The predicted parameter may comprise information about one or more of where particles are created, which solid phase precipitates, where agglomeration and attrition dominates, how feeding and the mixing of the feed streams influences particle formation, optimizations of the status quo and the like.

The physico-chemical white box model 128 may comprise at least one model of at least one precipitation process. The method further may comprise at least one prediction step 142. In the prediction step 142, the at least one predicted parameter may be determined from the physico-chemical white box model 128, wherein the operating conditions and plant equipment layout, in particular the initial value of the operating conditions and plant equipment layout, may be used as input for the physico-chemical white box model 128.

As shown in Figure 5, the physico-chemical white box model 128 comprises the thermodynamics model 130, the solid formation model 132 and the CFD based numerical simulation 134.

The thermodynamics model 130 may comprise at least one database and at least one solver. The solver may be configured for handling complex equilibria and solubility products for electrolytes. For example, the solver may be configured for handling carbonic acid equilibrium, which can be superposed by numerous other equilibria of ions. With respect to thermodynamics model 130 reference is made to e.g. https://wwwbrr.cr.usgs.gov/projects/GWC_coupled/phreeqc.v1/, or Hartig et al. "Multi-component and multi-phase population balance model: The case of Georgeite formation as methanol catalyst precursor phase", Chemical EngineeringScience 109(2014)158-170, or Schindler et al. "Zur Thermodynamik der Metallcarbonate, Löslichkeitskonstanten und Freie Bildungsenthalpien von Cu2(OH)2CO3(Malachit) und Cu3(OH)2(CO3)2(Azurit) bei 25 °C", Helvetica Chimica- Volumen 51, Fasciculus. The thermodynamics model may be configured for coupling to other software such as to Matlab, Ansys Fluent, and the like. The method may comprise at least one model preparation step 144. As shown in Figure 1A, the model preparation step 144 may be part of the prediction step 142. The model preparation step 144 may comprise preparing, in particular calibrating, the thermodynamics model 130. The thermodynamics model 130 may be calibrated by using information from literature, solubility products, and complex formation constants. Additionally or alternatively, the thermodynamics model 130 may be calibrated by using information from solubility measurements in a mother liquor, and the like.

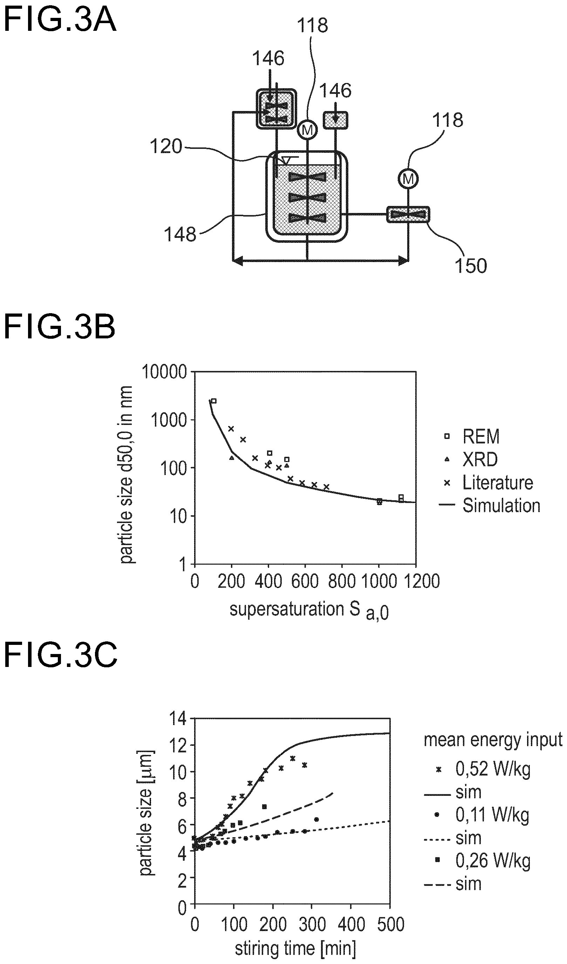

The at least one solid formation model 132 may be based at least partially on experimental data. The model preparation step 144 may comprise preparing, in particular calibrating, the solid formation model 132. The solid formation model 132 may comprise at least one first model part relating to primary mechanisms such as nucleation and growth. The solid formation model 132 may comprise at least one second model part relating to secondary mechanisms such as agglomeration and/or aging and/or attrition. With respect to solid formation model reference is made to e.g. Kügler et al. "On Precipitation of Sparingly Soluble Fluoride Salts", Cryst. Growth Des. 2018, 18, 2, 728-733, December 13, 2017, https://doi.org/10.1021/acs.cgd.7b01115. With respect to primary mechanisms, the solid formation model 132 may be prepared by using information from non-mixing influenced experiments with a mixing nozzle and fitting of rigorous, physical models with one single fit parameter adapted with one-dimensional population balance to experimentally achieved particle sizes. With respect to secondary mechanisms, the solid formation model 132 may be prepared by using information from tailored experiments. Figure 3A to 3C show an embodiment of experimental setup of calibration of solid formation kinetics and experimental results. Figure 3A shows an exemplary setup for calibrating single mechanisms during precipitation. The experimental setup comprises two feed supplies 146, wherein in one of the feed supplies 146 is high supersatuation. Information about agglomeration and/or aging may be determined in an aging vessel 148 with a defined initial particle size distribution by measuring agglomeration tendency and fitting of agglomeration kernel for the population balance. For example, information about attrition may be determined in a high shear cell 150 with defined energy input and fitting of attrition kernel for the population balance. Figure 3B shows calibration of fundamental kinetics of primary processes from precipitation experiments in the mixing nozzle 120. Figure 3B shows the particle size d50,0 in mm as a function of supersaturation S_{a,0} for values from literature and measured with static and dynamic light scattering which are compared to scanning electron microscopy (SEM) images (denoted REM in Figure 3B) and X-ray crystallography (XRD). In addition, a fit of the single required fit parameter "interfacial tension between crystal and liquid" is shown. Figure 3C shows calibration of agglomeration kinetics in a stirred vessel. In particular, the particle size in µm as a function of the stirring time in minutes is shows for different mean energy input (for 0.52 W/kg, 0.11 W/kg and 0.26 W/kg) and fit results.

The physico-chemical white box model 128, in particular the CFD based numerical simulation 134, may be configured for modelling of the precipitation process by means of population balances. The CFD based numerical simulation 134 may comprise at least one population balance model. The population balance model may comprise population balance equations (PBEs) which describe evolution of a population of particles. Specifically, the PBEs describe the precipitation process and its subprocesses such as nucleation, agglomeration, breakage, and the like. The CFD based numerical simulation 134 may comprise a 3D CFD hydrodynamic calculation of a flow field of a precipitation reactor. Different software for CFD based numerical simulation 134 are available, e.g. commercial solver - Ansys Fluent or STAR CCM or non-commercial solver OpenFoam. With respect to CFD based numerical simulation 134 reference is made to e.g. Marchisio et al. "Quadrature method of moments for population-balance equations", April 16, 2004, https://doi.org/10.1002/aic.690490517, Anderson et al. "Predicting crystal growth via a unified kinetic three-dimensional partition model", Nature 544, 456-459 (2017); https://doi.org/10.1038/nature21684, Choi et al. "Investigation of Crystallization in a Jet Y-Mixer by a Hybrid Computational Fluid Dynamics and Process Simulation Approach", Crystal Growth & Design 2005, 5, 3, 959-968, April 9, 2005, https://doi.org/10.1021/cg049670x, Gavi et al. "CFD Modelling of Nano-Particle Precipitation in Confined Impinging Jet Reactors", Chemical Engineering Research and Design, Volume 85, Issue 5, 2007, Pages 735-744, https://doi.org/10.1205/cherd06176, Cheng et al. "CFD-PBE simulation of premixed continuous precipitation incorporating nucleation, growth and aggregation in a stirred tank with multi-class method", Chemical Engineering Science, Volume 68, Issue 1, 22 January 2012, Pages 469-480, https://doi.org/10.1016/j.ces.2011.10.032. The model preparation step 144 may comprise preparing the CFD based numerical simulation 134.

Specifically, the physico-chemical white box model 128 may comprise a combined model, wherein in the combined model the thermodynamics model 130, the solid formation model 132 and the CFD based numerical simulation 134 are coupled. Specifically, the thermodynamics model 130 and the solid formation kinetics 132 may be coupled to the CFD based numerical simulation 134. For example, the physico-chemical white box model 128 may be designed as follows. The CFD based numerical simulation 134 may comprise as input involved ions and/or compounds and inertia as scalar equations. Each component refers to a scalar equation of the CFD or may be a closing condition (sum of all components = 1) or may be calculated from stoichiometry. The CFD based numerical simulation 134 may be configured for calculating local mixing conditions, especially in the feed zone. The physico-chemical white box model 128 may comprise a coupling of the thermodynamics model 130 to the CFD based numerical simulation 134. The coupled thermodynamics model 130 and CFD based numerical simulation 134 may be configured for calculating of one or more of pH, composition, supersaturation and other quantities of interest in every grid cell and/or in at least one zone of interest. The physico-chemical white box model 128 may comprise a coupling of the solid formation model 132 to the CFD based numerical simulation 134. The coupled solid formation model 132 and CFD based numerical simulation 134 may be configured for calculating in every grid cell and/or in at least one zone of interest, an evolution of either the moments of the particle size distribution, e.g. by using a Quadrature Method of Moments (QMOM) or direct QMOM or with a class-based approach. By use of this method, local knowledge on solid formation in precipitation reactors 112 is achieved.

The processing device 138, as shown in Figure 5, may be an arbitrary device adapted to perform the optimization process, preferably by using at least one processor and/or at least one application-specific integrated circuit. Thus, as an example, the processing device 138 may comprise one or more programmable devices such as one or more computers, application-specific integrated circuits (ASICs), Field Programmable Gate Arrays (FPGAs), or other devices which are configured for performing the above-mentioned prediction. Thus, as an example, the at least one processing device 138 may have a software code stored thereon comprising a number of computer commands. The processing device 138 may provide one or more hardware elements for performing one or more of the named operations and/or may provide one or more processors with software running thereon for performing one or more of the named operations.

Figure 2B shows a result of the simulation of a precipitation process in the reactor 110. The the simulation of the precipitation process may provide information about the flow field 152, local information about supersaturation 154 and information about local agglomeration rate 156.

The predicted parameter may comprise additional information about supersaturation. Figure 4A shows experimental results showing impact of supersaturation S on particle size p. from left to right the particle size gets smaller, indicated with diminishing arrow p. At the same time from left to right the supersaturation increases, indicated with increasing arrow S. Thus, by control of supersaturation it is possible to adjust the particle morphology.

The predicted parameter may comprise additional information about local pH value, in particular as result from thermodynamic calculations. Large local pH gradients may be present in a well mixed vessel. The local pH value at nucleation zone may be relevant for the particle size. Figure 4B shows experimental results showing impact of pH-value on particle size. In Figure 4B, left, the catalyst precipitated at pH1 is shown, where an undesired crystalline phase precipitates. In Figure 4B, right, the same material system precipitated at pH2 with 14-times shortened washing time (the washing effectivity is quantified by the conductivity in the washing water) and highly beneficial solid handling properties of the slurry.

The specified parameter is optimized in step c) 136 by adapting the operating conditions of the production process and/or the physical properties of the plant equipment layout based on the predicted parameter. The optimizing may comprise comparing the predicted parameter to at least one threshold and/or at least one tolerance range. In case the predicted parameter is below or above the threshold and/or deviates from the tolerance range, the operating conditions and/or the physical properties of the plant equipment layout may be adapted depending on the comparison. For example, the predicted parameter may comprise local information about supersaturation for a mixing nozzle design. The mixing nozzle design may comprise a relative position or offset of mixer 118 and mixing nozzle 120. In addition to the local information about supersaturation, the predicted parameter may comprise information of the particle size. The physico-chemical white box model 128 may predict that for large offsets the supersaturation is low resulting in larger particles and that for smaller offsets the supersaturation is high resulting in smaller particles. The local information about supersaturation may be used to optimize the offset of mixer 118 and mixing nozzle 120 depending on the desired particle size of the chemical product.

The information about the predicted value of the parameter to be optimized and/or the predicted local and/or temporal and/or spatial condition of chemical and/or physical properties of the equipment 110 of the chemical plant and/or at least one predicted state of the equipment 110 of the chemical plant may allow precise adjusting of the respective parameters. In particular, the method may allow understanding technical precipitation processes in the chemical industry and understanding coherences between process and product. Improved process control may be possible. The method may allow model-predictive control of processes, leading to optimal process windows for the desired material. Moreover, the method may allow using less resources in downstream processing. Specifically, less wash water may be required by preventing formation of undesired solid phases e.g. by adjusting the pH during precipitation, according to thermodynamics model. Specifically, lower calcination temperatures may be possible e.g. by generating nano-disperse particles with lower melting point. Specifically, improved solid handling may be possible by avoiding solid phases that lead to poor flowability. Improvement of recipes may be possible such as by controlled Co-precipitation of multiple solid phases, prediction of yield and composition of particles. Moreover, transfer of recipes may be possible. Less trial and error may be required such that the method allows saving resources, in particular less off-spec material or waste produced and less manufacturing or cleaning afford by non-working recipes is needed. Moreover, tuning of material properties may be possible by controlling of local supersaturation, in particular by monitoring parameters such as particle size distribution, BET-surface according to Brunauer-Emmett-Teller (BET), tap density, or filter resistance.

Figure 1B shows an exemplary method for designing plant equipment layout of a chemical plant according to the present invention. The method comprises the following steps:
i) (denoted with reference number 122) specifying at least one parameter of a production process to be optimized;
ii) (denoted with reference number 124) receiving input data via at least one input channel 126, wherein the input data comprises operating conditions of the production process, physical properties of a start plant equipment layout, and at least one predicted parameter determined from a physico-chemical white box model 128, wherein the physico-chemical white box model 128 comprises at least one thermodynamics model 130, at least one solid formation model 132 and a computational fluid dynamics (CFD) based numerical simulation 134;
iii) (denoted with reference number 136) optimizing the specified parameter via at least one processing device 138, wherein the specified parameter is optimized by adapting the physical properties of the start plant equipment layout based on the predicted parameter;
iv) (denoted with reference number 158) determining a target plant equipment layout based on the adapted set of physical properties of the start plant equipment layout data;
v) (denoted with reference number 160) providing the target plant equipment layout.

The method for designing may comprise specifying the production process. For example, the production process may be at least one precipitation process of one or more of catalysts, zeolites, battery material, pigments, crop-science materials.

The providing the target plant equipment layout 160 may comprise generating at least one output 162, in particular to at least one designed of the plant equipment layout. The target plant equipment layout may be provided via at least one output channel. The output channel may comprise at least one output device 164. The output device 164 may comprise at least one display device. The chemical plant may be designed according to the determined the target plant equipment layout.

The method may comprise up-scaling or down-scaling the target plant equipment layout. The method for designing may allow model-based conception and design of precipitation assets. Specifically, a transfer from lab to process by scale-up or scale-down may be possible. This may allow shortening of transfer times from lab to pilot or production. Design of new reactor concepts may be possible by understanding the coherences between flow field and thermodynamics and solid formation. For example, if particle formation is restricted to a certain area in the reactor, a new design can be worked out to intensify this local spot.

Figure 5 shows an embodiment of a controlling system 166 and a designing system 168 according to the present invention.

The controlling system 166 comprises at least one communication interface 170 configured for specifying at least one parameter of a production process to be optimized. The controlling system 166 comprises the input channel 126 configured for receiving input data, wherein the input data comprises operating conditions of the production process, physical properties of a plant equipment layout, and at least one predicted parameter determined from the physico-chemical white box model 128. The physico-chemical white box model 128 comprises at least one thermodynamics model 130, at least one solid formation model 132 and a computational fluid dynamics (CFD) based numerical simulation 134. The controlling system 166 comprises the processing device 138 configured for optimizing the specified parameter. The processing device 138 is configured for optimizing the specified parameter by adapting the operating conditions of the production process and/or the physical properties of the plant equipment layout based on the predicted parameter.The controlling system 166 may be configured for performing the method for controlling and/or monitoring according to the present invention.

The designing system 168 comprises the communication interface 170 configured for specifying at least one parameter of a production process to be optimized. The designing system 168 comprises the input channel 126 configured for receiving input data. The input data comprises operating conditions of the production process, physical properties of a start plant equipment layout, and at least one predicted parameter determined from the physico-chemical white box model 128. The physico-chemical white box model 128 comprises at least one thermodynamics model 130, at least one solid formation model 132 and a computational fluid dynamics (CFD) based numerical simulation 134. The designing system 168 comprises the processing device 138 configured for optimizing the specified parameter. The processing device 138 is configured for optimizing the specified parameter by adapting the physical properties of the start plant equipment layout based on the predicted parameter. The processing device 138 is configured for determining a target plant equipment layout based on the adapted set of physical properties of the start plant equipment layout data. The designing system 168 comprises at least one output device 164. The output device 164 is configured for providing the target plant equipment layout. The designing system 168 may be configured for performing the method for designing according to the present invention.

List of reference numbers
- 110: equipment
- 112: reactor
- 114: housing
- 116: feed inlet
- 118: mixer
- 120: mixing nozzle
- 122: specifying
- 124: receiving
- 126: input channel
- 128: physico-chemical white box model
- 130: thermodynamics model
- 132: solid formation model
- 134: CFD based numerical simulation
- 136: optimizing
- 138: processing device
- 140: database
- 142: prediction step
- 144: model preparation step
- 146: feed supply
- 148: aging vessel
- 150: shear cell
- 152: flow field
- 154: local information about supersaturation
- 156: information about local agglomeration rate
- 158: determining
- 160: providing
- 162: output
- 164: output device
- 166: controlling system
- 168: designing system
- 170: communication interface

## Claims

1. A computer-implemented method for controlling and/or monitoring equipment (110) of a chemical plant, wherein the method comprises the following steps:
a) specifying at least one parameter of a production process to be optimized;
b) receiving input data via at least one input channel (126), wherein the input data comprises operating conditions of the production process, physical properties of a plant equipment layout, and at least one predicted parameter determined from a physico-chemical white box model (128), wherein the physico-chemical white box model (128) comprises at least one thermodynamics model (130), at least one solid formation model (132) and a computational fluid dynamics (CFD) based numerical simulation (134);
c) optimizing the specified parameter via at least one processing device (138), wherein the specified parameter is optimized by adapting the operating conditions of the production process and/or the physical properties of the plant equipment layout based on the predicted parameter.

2. The method according to the preceding claim, wherein the chemical plant comprises at least one reactor (112), wherein the reactor (112) is configured for performing at least one precipitation process.

3. The method according to any one of the preceding claims, wherein the parameter to be optimized is at least one physical property of the equipment (110) of the chemical plant.

4. The method according to any one of the preceding claims, wherein the predicted parameter comprises information about a predicted value of the parameter to be optimized and/or at least one predicted local and/or temporal and/or spatial condition of chemical and/or physical properties of the equipment (110) of the chemical plant and/or at least one predicted state of the equipment (110) of the chemical plant.

5. The method according to any one of the preceding claims, wherein the operating conditions of the production process comprise at least one parameter selecting from the group consisting of: temperature; pressure; pH-value; viscosity; rotational speed of mixer; flow rate; feed composition; feed mass flow; ingredients, concentration; order of additions.

6. The method according to any one of the preceding claims, wherein the physico-chemical white box model (128) comprises at least one model of at least one precipitation process.

7. The method according to any one of the preceding claims, wherein the method further comprises at least one prediction step (142), wherein, in the prediction step (142), the at least one predicted parameter is determined from the physico-chemical white box model (128), wherein the operating conditions and plant equipment layout are used as input for the physico-chemical white box model (128).

8. A computer-implemented method for designing plant equipment layout of a chemical plant, wherein the method comprises the following steps:
i) specifying at least one parameter of a production process to be optimized;
ii) receiving input data via at least one input channel (126), wherein the input data comprises operating conditions of the production process, physical properties of a start plant equipment layout, and at least one predicted parameter determined from a physico-chemical white box model (128), wherein the physico-chemical white box model (128) comprises at least one thermodynamics model (130), at least one solid formation model (132) and a computational fluid dynamics (CFD) based numerical simulation (134);
iii) optimizing the specified parameter via at least one processing device (138), wherein the specified parameter is optimized by adapting the physical properties of the start plant equipment layout based on the predicted parameter;
iv) determining a target plant equipment layout based on the adapted set of physical properties of the start plant equipment layout data;
v) providing the target plant equipment layout.

9. The method according to the preceding claim, wherein the method comprises up-scaling or down-scaling the target plant equipment layout.

10. The method according to any one of the preceding claims referring to a method for designing plant equipment layout, wherein the method comprises specifying the production process.

11. The method according to any one of the preceding claims referring to a method for designing plant equipment layout, wherein the chemical plant comprises at least one reactor (112), wherein the reactor (112) is configured for performing at least one precipitation process.

12. The method according to any one of the preceding claims referring to a method for designing plant equipment layout, wherein the parameter to be optimized is at least one physical property of the equipment (110) of the chemical plant.

13. The method according to any one of the preceding claims referring to a method for designing plant equipment layout, wherein the predicted parameter comprises information about a predicted value of the parameter to be optimized and/or at least one predicted local and/or temporal and/or spatial condition of chemical and/or physical properties of the equipment (110) of the chemical plant and/or at least one predicted state of the equipment (110) of the chemical plant.

14. The method according to any one of the preceding claims referring to a method for designing plant equipment layout, wherein the operating conditions of the production process comprise at least one parameter selecting from the group consisting of: temperature; pressure; pH-value; viscosity; rotational speed of mixer; flow rate; feed composition; feed mass flow; ingredients, concentration; order of additions.

15. The method according to any one of the preceding claims referring to a method for designing plant equipment layout, wherein the physico-chemical white box model (128) comprises at least one model of at least one precipitation process.

16. The method according to any one of the preceding claims referring to a method for designing plant equipment layout, wherein the method further comprises at least one prediction step (142), wherein, in the prediction step (142), the at least one predicted parameter is determined from the physico-chemical white box model (128), wherein the operating conditions and plant equipment layout are used as input for the physico-chemical white box model (128).

17. A computer program, specifically an application, for controlling and/or monitoring equipment of a chemical plant, wherein the computer program comprises instructions which, when the program is executed by a computer or computer network, cause the computer or computer network to carry out the following steps:
A) specifying at least one parameter of a production process to be optimized;
B) receiving input data via at least one input channel (126), wherein the input data comprises operating conditions of the production process, physical properties of a plant equipment layout, and at least one predicted parameter determined from a physico-chemical white box model (128), wherein the physico-chemical white box model (128) comprises at least one thermodynamics model (130), at least one solid formation model (132) and a computational fluid dynamics (CFD) based numerical simulation (134);
C) optimizing the specified parameter via at least one processing device (138), wherein the specified parameter is optimized by adapting the operating conditions of the production process and/or the physical properties of the plant equipment layout based on the predicted parameter.

18. A computer program, specifically an application, for designing plant equipment layout of a chemical plant, wherein the computer program comprises instructions which, when the program is executed by a computer or computer network, cause the computer or computer network to carry out the following steps:
I) specifying at least one parameter of a production process to be optimized;
II) receiving input data via at least one input channel (126), wherein the input data comprises operating conditions of the production process, physical properties of a start plant equipment layout, and at least one predicted parameter determined from a physico-chemical white box model (128), wherein the physico-chemical white box model (128) comprises at least one thermodynamics model (130), at least one solid formation model (132) and a computational fluid dynamics (CFD) based numerical simulation (134);
III) optimizing the specified parameter via at least one processing device (138), wherein the specified parameter is optimized by adapting the physical properties of the start plant equipment layout based on the predicted parameter;
IV) determining a target plant equipment layout based on the adapted set of physical properties of the start plant equipment layout data;
V) providing the target plant equipment layout.

19. A controlling system (166) for controlling and/or monitoring equipment (110) of a chemical plant, wherein the controlling system (166) comprises at least one communication interface (170) configured for specifying at least one parameter of a production process to be optimized, wherein the controlling system (166) comprises at least one input channel (126) configured for receiving input data, wherein the input data comprises operating conditions of the production process, physical properties of a plant equipment layout, and at least one predicted parameter determined from a physico-chemical white box model (128), wherein the physico-chemical white box model (128) comprises at least one thermodynamics model (130), at least one solid formation model (132) and a computational fluid dynamics (CFD) based numerical simulation (134), wherein the controlling system (166) comprises at least one processing device (166) configured for optimizing the specified parameter, wherein the processing device (138) is configured for optimizing the specified parameter by adapting the operating conditions of the production process and/or the physical properties of the plant equipment layout based on the predicted parameter.

20. The controlling system (166) according to the preceding claim, wherein the controlling system (166) is configured for performing the method for controlling and/or monitoring according to any one of the preceding claims referring to a method for controlling and/or monitoring.

21. A designing system (168) for designing plant equipment layout of a chemical plant, wherein the designing system (168) comprises at least one communication interface (170) configured for specifying at least one parameter of a production process to be optimized, wherein the designing system (168) comprises at least one input channel (126) configured for receiving input data, wherein the input data comprises operating conditions of the production process, physical properties of a start plant equipment layout, and at least one predicted parameter determined from a physico-chemical white box model (128), wherein the physico-chemical white box model (128) comprises at least one thermodynamics model (130), at least one solid formation model (132) and a computational fluid dynamics (CFD) based numerical simulation (134), wherein the designing system (168) comprises at least one processing device (138) configured for optimizing the specified parameter, wherein the processing device (138) is configured for optimizing the specified parameter by adapting the physical properties of the start plant equipment layout based on the pre-dieted parameter, wherein the processing device (138) is configured for determining a target plant equipment layout based on the adapted set of physical properties of the start plant equipment layout data, wherein the designing system (168) comprises at least one output device (164), wherein the output device (164) is configured for providing the target plant equipment layout.

22. The designing system (168) according to the preceding claim, wherein the designing system (168) is configured for performing the method for designing according to any one of the preceding claims referring to a method for designing.
